# EUROPEAN PATENT APPLICATION

(11) **EP 0 925 873 A2**
(43) Date of publication of application: **30.06.1999**
(21) Application number: 98121891.0
(22) Date of filing: 18.11.1998
(51) Int. Cl.: B23Q 5/34, B23Q 1/58

(54) **Machine tool with a linear feeding means**

(30) Priority: 03.12.1997 JP 34733897
(71) Applicant: KITAMURA MACHINERY CO.,LTD., Takaoka-shi Toyama-ken (JP)
(72) Inventor: The designation of the inventor has not yet been filed
(74) Representative: Patentanwälte Ruff, Beier, Schöndorf und Mütschele

(57) **Abstract**

A machine tool in which a feed member (11) is fed in a feeding direction relative to a fixed member (2), characterized by that the feed member (11) is guided by a linear linkage mechanism (12), the linear linkage mechanism (12) comprising a first arm (14) linked to the fixed member (2) at its one end so as to swivel about a first axis (A), a second arm (15) having the same length as the first arm (14), the second arm (15) being linked to the first arm at its one end so as to swivel about a second axis (B) and also linked to the feed member (11) at its other end so as to swivel about a third axis (C), a first gear (D) secured on the fixed member (2) at the one end of the first arm (14) and being coaxial with the first axis (A), a second gear (d) secured on the second arm (15) at the other end thereof and being coaxial with the second axis (B), a chain (E) wrapped between the first and the second gears (D, d), the first gear (D) having the twice diameter as the second gear (d).

## Description

### Background of the Invention

The present invention relates to a machine tool in which a feed member, such as a table and a head, is guided by a guide means and is fed by a drive means in a feeding direction relative to a fixed base member.

In a conventional machine tool, a table or a head is guided by a rail which is formed in a dovetail type, for instance.

In such a guide means, a sliding contact between two facing members is inevitable.

In these days, the table or the head in the machine tool is required to be fed at high speed more and more. For such a high speed feeding, several novel mechanisms have been suggested.

Among them rink mechanisms have been focused because they have no sliding members such as rails and their counterparts. Some rink mechanisms have been practically applied to high speed feeding in a machine tool. In such a high speed feeding, rink mechanisms are intended to guide the feed member as well as to drive it.

In said conventional rink mechanisms, a plurality of axis members for feeding the feed member are driven via corresponding servo motors, so that the feed member is fed in a predetermined linear path or curved path. Therefore a complicated processing program for driving synchronously the plurality of servomotors is necessary. However this processing program is troublesome to prepare and costs a lot.

### Summary of the Invention

The object of the present invention is to provide a machine tool wherein a feed member is guided by a simple linkage mechanism, which is applicable to high speed feeding without costly troublesome processing programs.

According to the present invention, a feed member is guided by a linear linkage mechanism. Said linkage mechanism comprises a first arm linked to a fixed member at its one end so as to swivel about a first axis, a second arm having the same length as the first arm, the second arm being linked to the first arm at its one end so as to swivel about a second axis and also linked to the feed member at its other end so as to swivel about a third axis, a first gear or pulley secured on the fixed member at the one end of the first arm and being coaxial with the first axis, a second gear or pulley secured on the second arm at the other end thereof and being coaxial with the second axis, a chain or belt wound between the first and the second gears or pulleys. And the first gear or pulley has the twice diameter as the second gear or pulley.

The feed member is a table for accepting a workpiece to be machined, or a spindle head, provided with a spindle for receiving a tool, for instance.

The feed member can be guided by two or four linear linkage mechanisms.

The feed member can be guided by a conventional roller type or a slide type guide mechanism in addition to the linear linkage mechanism.

### Brief Description of the Drawings

Fig. 1 is a perspective view showing a guide device for a table in a machine tool according to the present invention,
Fig. 2 is a perspective view showing a guide device for a spindle head in a machine tool according to the present invention,
Fig. 3 is an explaining view showing a linear linkage mechanism in a machine tool according to the present invention,
Fig. 4 is a view showing one motion of a linear linkage mechanism in a machine tool according to the present invention,
Fig. 5 is a view showing another motion of the linear linkage mechanism shown in Fig. 4,
Fig. 6 is a view showing a further motion of the linear linkage mechanism shown in Fig. 4,
Fig. 7 is a view showing one motion of a modified linear linkage mechanism in a machine tool according to the present invention,
Fig. 8 is a view showing another motion of the modified linear linkage mechanism shown in Fig. 5.

### Preferred Embodiments of the Invention

Preferred embodiments according to the present invention are described hereinafter with reference to the drawings.

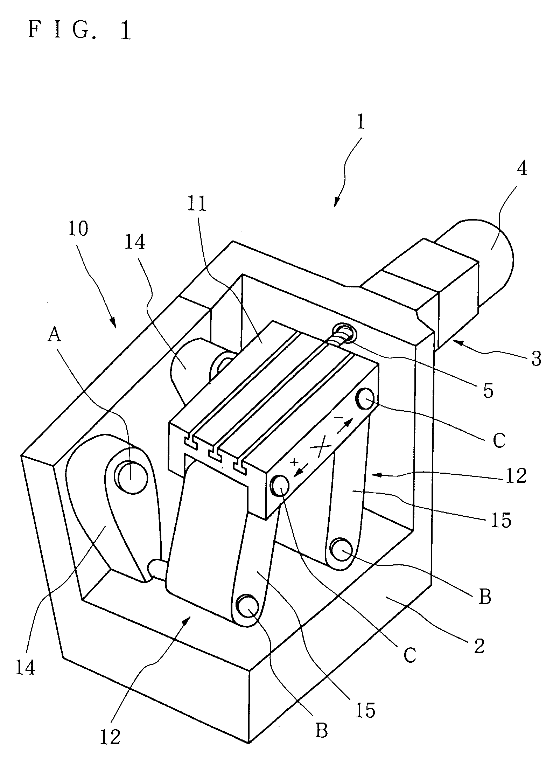

A guide device 10, illustrated in Fig. 1, is intended to guide a table 11 along x axis in a machine tool 1.

The guide device 10 comprises a linear linkage mechanism 12 for guiding a table 11 along x axis, and a drive means 3 for supplying a drive force to the table 11.

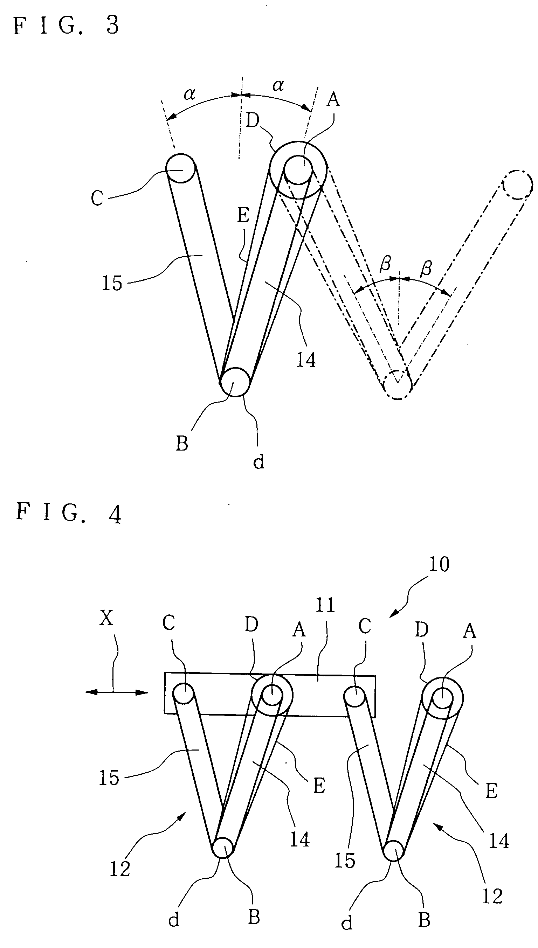

The table 11 is guided so as to be slid along x axis not by a slide type guide means such as a rail and its counterpart, but by two linear linkage mechanisms 12, exclusively. A principle of this linear linkage mechanism 12 will be described latter with reference to Figs. 3-6.

The drive means 3 comprises a ball screw 5 aligning parallel to x axis, a servo motor 4 connected to one end of the ball screw 5 for supplying a drive forth, a ball nut (not shown) fixedly mounted on the table 11 and meshing with the ball screw 5 for cooperating therewith. The drive means 3 dose not guide the table 11 at all, but give it a drive force for feeding it along x axis.

The guide device 10 for the table 11, shown in Fig. 1, can be applied to various conventional machine tools. It can be also combined with a spindle head device which will be described below, thereby a machine tool equipped with the spindle head and the table is provided.

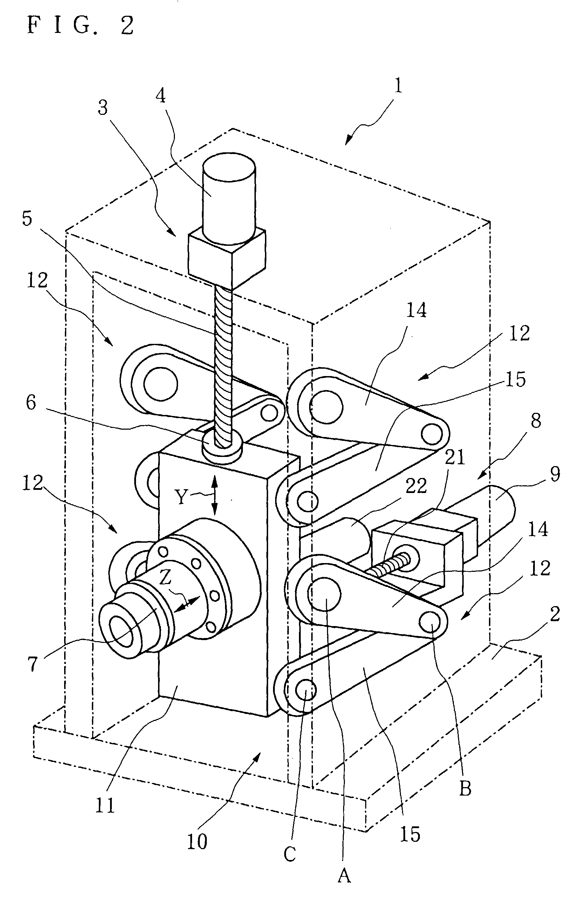

The guide device 10, illustrated in Fig. 2, comprises a linear linkage mechanism 12 for guiding a spindle head 11 along y axis, and a drive means 3 for supplying a drive forth to the spindle head 11.

The spindle head 11 is guided exclusively by four linear linkage mechanisms 12. A principle of the linear linkage mechanism 12 will be described latter with reference to Figs. 3-6.

The drive means 3 comprises a ball screw 5 aligning parallel to y axis, a servo motor 4 connected to one end of the ball screw 5 for supplying a drive forth, a ball nut (not shown) fixedly mounted on the spindle head 11 and meshing with the ball screw 5 for cooperating therewith.

The spindle head 11 is equipped with a spindle 7. The spindle 7 can be rotated at high speed by a drive motor 22.

The spindle 7 is guided by a guide device for telescopic movement along z axis by a drive force from a drive means 8. This guide device is conventional one which utilizes a sliding contact.

The drive means 8 comprises a ball screw 22 aligning parallel to z axis, a servo motor 9 connected to one end of the ball screw 22 for supplying a drive forth, a ball nut (not shown) fixedly mounted on the spindle 7 and meshing with the ball screw 5 for cooperating therewith. When the ball screw 5 is rotated the ball nut, consequently the spindle head 7 is telescopically moved.

A principal of the linear linkage mechanism 12, shown in Figs. 1 and 2, is described hereinafter with reference to Figs. 3-6. The linear linkage mechanism is also called a direct driven type linkage.

The linear linkage mechanism 12 comprises a first arm 14 and a second arm 15 for link connection between the feed member 11 (not shown in Figs. 3-6) and the fixed base member (not shown in Figs. 3-6). The first arm 14 is linked at its one end to the fixed base member so as to swivel about an axis A. The second arm 15 is linked at its one end to the feed member 11 so as to swivel about an axis C. The second arm 15 is also linked at its other end to the other end of the first arm 14 so as to swivel about an axis B. The second arm 15 has the same length as the first arm 14.

A first pulley or a first gear D is fixedly mounted on the fixed base member at the one end of the first arm 14. And the first pulley or gear D is coaxial with the axis A.

A second pulley or a second gear d is fixedly mounted at the other end of the second arm 15. And the second pulley or gear d is coaxial with the axis B.

Between the first and the second pulleys or gears D, d is wound a belt or a chain E. The chain E can be replaced by one gear or odd number of gears.

The diameter of the first pulley or the first gear D is determined to be twice that of the second pulley or the second gear d.

Therefore the angle between the first arm 14 and the center line passing through the axis B, and the angle between the second arm 15 and the same center line should be constantly equal. The center line passing through the axis B is vertical in the drawings. Two equal angles are depicted by references alpha and beta, respectively, in Fig. 3.

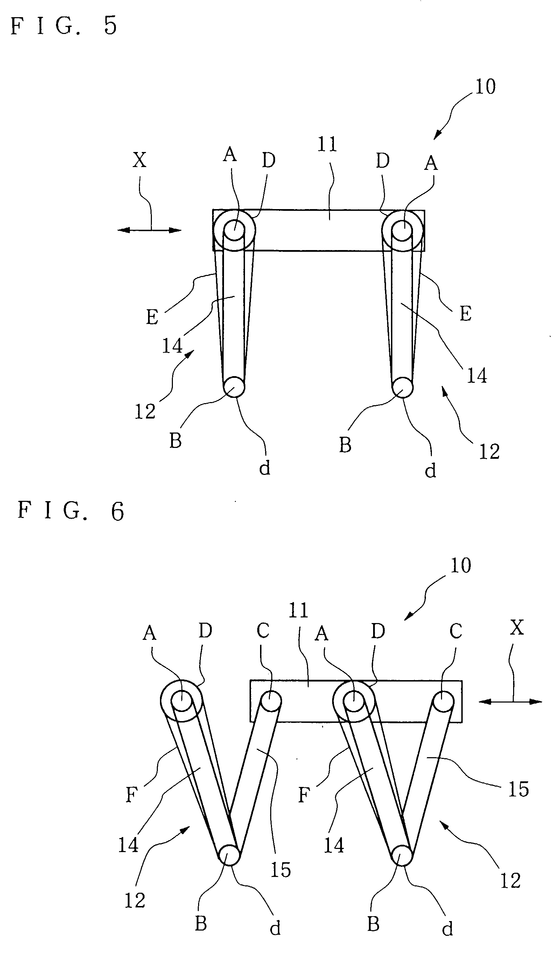

Figs. 4-6 illustrate three different conditions in which the feed member 11 is located in the left position, the neutral position, and the right position, respectively. Thus the feed member 11 is guided so as to be slid along x axis by means of the guide mechanism 12.

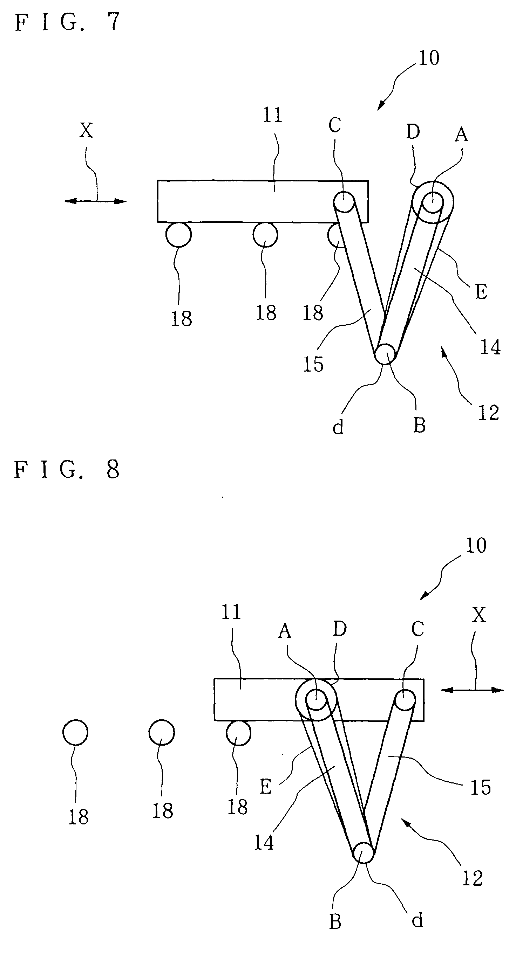

A modified embodiment of the guide device according to the present invention is shown in Figs. 7 and 8.

This guide device 10 is provided with two linear linkage mechanisms 12 disposed on a front and a rear faces of the feeding member 11, respectively, and a conventional roller type guide mechanism 18 aligned along x axis. Two guide mechanisms 12, 18 cooperate with each other to guide the feed member along x axis. A conventional slide type guide mechanism can be replaced by the roller type guide mechanism 18.

In such a guide mechanism wherein the conventional roller type or slide type guide mechanism is used in addition to the linear linkage mechanism 12 according to the invention, a load subjected to the roller type or the slide type guide mechanism can be decreased.

## Claims

1. A machine tool in which a feed member (11) is fed in a feeding direction relative to a fixed member (2), characterized by that the feed member (11) is guided by a linear linkage mechanism (12), the linear linkage mechanism (12) comprising a first arm (14) linked to the fixed member (2) at its one end so as to swivel about a first axis (A), a second arm (15) having the same length as the first arm (14), the second arm (15) being linked to the first arm at its one end so as to swivel about a second axis (B) and also linked to the feed member (11) at its other end so as to swivel about a third axis (C), a first gear (D) secured on the fixed member (2) at the one end of the first arm (14) and being coaxial with the first axis (A), a second gear (d) secured on the second arm (15) at the other end thereof and being coaxial with the second axis (B), a chain (E) wound between the first and the second gears (D, d), the first gear (D) having the twice diameter as the second gear (d).

2. A machine tool in which a feed member (11) is fed in a feeding direction relative to a fixed member (2), characterized by that the feed member (11) is guided by a linear linkage mechanism (12), the linear linkage mechanism (12) comprising a first arm (14) linked to the fixed member (2) at its one end so as to swivel about a first axis (A), a second arm (15) having the same length as the first arm (14), the second arm (15) being linked to the first arm at its one end so as to swivel about a second axis (B) and also linked to the feed member (11) at its other end so as to swivel about a third axis (C), a first pulley (D) secured on the fixed member (2) at the one end of the first arm (14) and being coaxial with the first axis (A), a second pulley (d) secured on the second arm (15) at the other end thereof and being coaxial with the second axis (B), a belt (E) wound between the first and the second pulleys (D, d), the first pulley (D) having the twice diameter as the second pulley (d).

3. A machine tool according to claim 1 or 2, wherein the feed member (11) is a work table for accepting a workpiece to be machined.

4. A machine tool according to claim 1 or 2, wherein the feed member (11) is a spindle head having a spindle (7) for receiving a tool.

5. A machine tool according to claim 1 or 2, wherein the feed member (11) is guided by two or four linear linkage mechanisms (12).

6. A machine tool according to claim 1 or 2, wherein the feed member (11) is guided by a roller type guide mechanism (18) in addition to the linear linkage mechanism (12).

7. A machine tool according to claim 1 or 2, wherein the feed member (11) is guided by a slide type guide mechanism in addition to the linear linkage mechanism (12).
